# EUROPEAN PATENT APPLICATION

(11) **EP 4 583 187 A1**
(43) Date of publication of application: **09.07.2025**
(21) Application number: 24219286.2
(22) Date of filing: 12.12.2024
(51) Int. Cl.: H01M 4/131, H01M 4/36, H01M 4/48, H01M 4/505, H01M 4/525, H01M 4/58, H01M 4/62, H01M 10/0525, H01M 4/485

(54) **ADDITIVES FOR POSITIVE ELECTRODES, PREPARATION METHODS THEREOF, POSITIVE ELECTRODES, AND RECHARGEABLE LITHIUM BATTERIES**

(30) Priority: 08.01.2024 KR 20240003023
(71) Applicant: SAMSUNG SDI CO., LTD., Yongin-si, Gyeonggi-do 17084 (KR)
(72) Inventor: Cho, Moonju, Yongin-si, Gyeonggi-do 17084 (KR); Kim, Hyunwoo, Yongin-si, Gyeonggi-do 17084 (KR); Han, Seung-Hun, Yongin-si, Gyeonggi-do 17084 (KR); Lim, Seonghyun, Yongin-si, Gyeonggi-do 17084 (KR); Kim, Beom Kwon, Yongin-si, Gyeonggi-do 17084 (KR)
(74) Representative: Michalski Hüttermann & Partner Patentanwälte mbB

(57) **Abstract**

Disclosed are an additive for a positive electrode, a preparation method thereof, and a positive electrode and a rechargeable lithium battery including the additive, the additive including lithium iron oxide particle; and metal oxide particles including a metal having an oxidation number of 4 or higher located on the surface of the lithium iron oxide particles.

## Description

### CROSS-REFERENCE TO RELATED APPLICATION

This application claims the benefit of priority to Korean Patent Application No. 1 0-2024-0003023 filed in the Korean Intellectual Property Office on January 8, 2024, the entire contents of which are incorporated herein by reference.

### BACKGROUND

### 1. Field

Additives for positive electrodes, preparation methods thereof, positive electrodes, and rechargeable lithium batteries are disclosed.

### 2. Description of the Related Art

With the increasing use of electronic devices using batteries such as, e.g., mobile phones, laptop computers, electric vehicles, etc., the demand for high-performance rechargeable lithium batteries having high energy density, high capacity, and long lifecycle characteristics is increasing.

Because these rechargeable lithium batteries also are widely used in large-capacity devices such as, e.g., electric vehicles, electric mobility devices, etc., improving performance in terms of capacity, efficiency, and lifecycle characteristics may be advantageous.

However, high-capacity rechargeable lithium batteries typically undergo capacity loss at the positive electrode because lithium ions of the positive electrode are consumed by forming a SEI (Solid Electrolyte Interphase) layer on the surface of a negative electrode in initial charge and discharge cycle.

In order to compensate for the capacity loss due to the lithium consumption, there are technologies for pre-lithiation of the positive electrode or the negative electrode. However, difficulties in achieving stability and processability of the rechargeable lithium batteries remain.

### SUMMARY

Some example embodiments include an additive for a positive electrode capable of improving the dispersibility of a positive electrode slurry and reducing or suppressing gelation, a method for preparing the additive, a positive electrode, and a rechargeable lithium battery with improved charge/discharge efficiency, capacity characteristics, and lifecycle characteristics.

In some example embodiments, an additive for a positive electrode includes a lithium iron oxide particle, and metal oxide particles including a metal having an oxidation number of 4 or higher located on the surface of the lithium iron oxide particles.

In some example embodiments, a method of preparing an additive for a positive electrode includes dry-mixing metal oxide particles including a metal with an oxidation number of 4 or higher and lithium iron oxide particles, and heat-treating the dry-mixed resulting material.

In some example embodiments, a positive electrode includes a positive electrode current collector, and a positive electrode active material layer on the positive electrode current collector, wherein the positive electrode active material layer includes the aforementioned additive for a positive electrode.

In some example embodiments, a rechargeable lithium battery including the aforementioned positive electrode, a negative electrode, and an electrolyte is disclosed.

The additive for a positive electrode according to some example embodiments can improve dispersibility of the positive electrode slurry and reduce or suppress the gelation phenomenon. A rechargeable lithium battery to which the additive for a positive electrode is applied can have improved charge/discharge efficiency, capacity characteristics, and lifecycle characteristics.

### BRIEF DESCRIPTION OF THE DRAWINGS

FIGS. 1 to 4 are cross-sectional views schematically showing rechargeable lithium batteries according to some example embodiments.
FIG. 5 is a schematic view illustrating the structure of an additive for a positive electrode according to some example embodiments.
FIG. 6 is a graph showing changes in viscosity according to strain rate for the positive electrode slurries prepared in Example 1 and Comparative Examples 1 and 2.
FIG. 7 is a graph showing changes in modulus according to strain rate for the positive electrode slurries prepared in Example 1 and Comparative Examples 1 and 2.
FIG. 8 is a graph showing changes in viscosity over time for each positive electrode slurries prepared in Example 1 and Comparative Examples 1 and 2 while stirring at low speed.
FIG. 9 is an image taken using a scanning electron microscope (SEM) of the additive for a positive electrode prepared in Example 1.
FIG. 10 is an image taken using a scanning electron microscope (SEM) of the additive for a positive electrode prepared in Comparative Example 1.
FIG. 11 is an image taken using a scanning electron microscope (SEM) of the additive for a positive electrode prepared in Comparative Example 2.

### DETAILED DESCRIPTION

Hereinafter, example embodiments of the present disclosure will be described in detail. However, these example embodiments are exemplary, the present invention is not limited thereto and the present invention is defined by the scope of the claims.

As used herein, when specific definition is not otherwise provided, It will be understood that when an element such as a layer, film, region, or substrate is referred to as being "on" another element, it may be directly on the other element or intervening elements may also be present.

As used herein, when specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, or a reaction product of constituents.

As used herein, when a definition is not otherwise provided, a particle diameter may be an average particle diameter. This average particle diameter means an average particle diameter (D₅₀), which is a diameter of particles with a cumulative volume of 50 volume% in the particle size distribution. The average particle diameter (D₅₀) can be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range. From this, the average particle diameter (D₅₀) value may be easily obtained through a calculation. A laser diffraction method may also be used. When measuring by laser diffraction, for example, the particles to be measured are dispersed in a dispersion medium and subsequently introduced into a commercially available laser diffraction particle size measuring device (e.g., MT 3000 available from Microtrac, Ltd.) using ultrasonic waves at about 28 kHz, and after irradiation with an output of 60 W, the average particle diameter (D₅₀) based on 50% of the particle size distribution in the measuring device can be calculated.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In addition, "layer" herein includes not only a shape formed on the whole surface when viewed from a plan view, but also a shape formed on a partial surface.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Additive for Positive Electrode

In some example embodiments, an additive for a positive electrode includes lithium iron oxide particles; and metal oxide particles including a metal having an oxidation number of 4 or higher located on the surface of the lithium iron oxide particles (1).

There is increased interest in improving the capacity, efficiency, and lifecycle characteristics of rechargeable lithium batteries. However, in the case of a high-capacity rechargeable lithium battery, lithium ions of the positive electrode are consumed by forming a solid electrolyte interphase (SEI) layer on the surface of the negative electrode in the initial charge and discharge cycle, so that capacity loss may occur in the positive electrode.

As a way to compensate for the loss of capacity due to lithium consumption, a technology for pre-lithiation of the positive electrode or negative electrode is being developed, but there are limitations in ensuring the stability or processability of the battery. For this reason, research is needed on methods to compensate for battery capacity loss while utilizing existing battery manufacturing processes.

Accordingly, in some example embodiments, an additive for a positive electrode including lithium iron oxide particles as core particles and metal oxide particles including a metal having an oxidation number of 4 or higher located on the surface of the core particles is proposed. Through this, while achieving desired or improved performance of the battery through the core particles, dispersibility of the positive electrode slurry can be improved by introducing an acidic coating of metal oxide particles on the core particles, and the gelation phenomenon of the positive electrode slurry can be reduced or suppressed. In addition, by using the additive for a positive electrode in the positive electrode, a rechargeable lithium battery with improved initial efficiency, capacity characteristics, and lifecycle characteristics can be implemented.

In order to compensate for capacity loss due to lithium consumption and improve battery performance, the additive for a positive electrode includes lithium iron oxide particles as core particles. These lithium iron oxide particles have a high theoretical capacity of about 700 mAh/g, which is higher than the theoretical capacity of lithium-based metal oxides such as Li₂NiO₄, Li₅NiO₄, and Li₆CoO₄. Therefore, by adopting these lithium iron oxide particles as the core particles of the additive for a positive electrode, the initial efficiency of the rechargeable lithium battery can be significantly improved, and capacity loss due to lithium consumption can be sufficiently compensated.

In some example embodiments, the lithium iron oxide particles may be represented by Chemical Formula 1. When the lithium iron oxide particles is represented by Chemical Formula 1, the low initial efficiency of the negative electrode can be compensated for by lithium iron oxide particles, which are the core particles of the additive for the positive electrode, and reversible capacity and lifecycle characteristics can be improved.

[Chemical Formula 1] Li₅₊ₐFeO_{4-b}

In Chemical Formula 1, 0≤a≤1, and 0≤b≤1.

For example, in Chemical Formula 1, 0≤a≤0.8, 0≤a≤0.5, 0≤a≤0.3, or 0≤a≤0.2. Additionally, in Chemical Formula 1, 0≤b≤0.9, 0≤b≤0.8, 0≤b≤0.6, or 0≤b≤0.5.

For example, the average particle diameter (D₅₀) of lithium iron oxide particles may be about 5 µm to about 20 µm, for example about 5 µm to about 15 µm, or about 10 µm to about 15 µm. Within this range, the lithium iron oxide particles can be harmoniously mixed with the components in the positive electrode active material layer to constitute an additive for a positive electrode, and can be more advantageous in improving charge/discharge efficiency and lifecycle characteristics.

In some example embodiments, based on 100 wt% of the additive for the positive electrode, the lithium iron oxide particles may be included in an amount of about 80 wt% to about 99 wt%, for example about 83 wt% to about 97 wt% or about 85 wt% to about 95 wt%, or about 90 wt% to about 95 wt%. Within any of the above ranges, improving charge/discharge efficiency, capacity characteristics, and lifecycle characteristics by introducing lithium iron oxide particles as core particles can be improved or maximized.

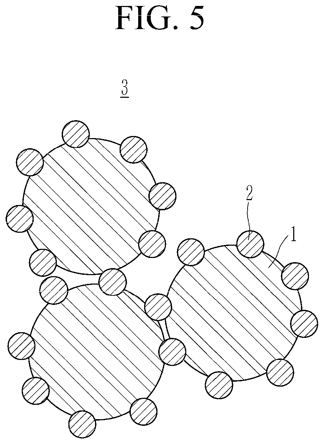

A schematic view schematically showing the structure of the additive for a positive electrode according to some example embodiments is illustrated in FIG. 5. As shown in FIG. 5, the additive 3 for a positive electrode includes metal oxide particles 2 of a metal having an oxidation number of 4 or higher located on the surface of the lithium iron oxide particles 1. In an example, the metal oxide is not particularly limited as long as the oxide is an oxide of a metal having an oxidation number of 4 or higher.

The lithium iron oxide particles are used as an additive for the positive electrode and are used in the preparing process of the positive electrode slurry. These lithium iron oxide particles may have reduced dispersibility due to the low average particle size thereof, and gelation of the slurry may easily occur due to high residual lithium. The lithium included in the lithium iron oxide particles may make the positive electrode slurry be basic, e.g., have a high pH, and cause a dehydrofluorination reaction with binders, especially fluorine-based binders such as, e.g., PVdF. This can cause aggregation of the binder by forming double bonds of fluorine-based binders such as, e.g., PVdF or networking between PVdFs. This phenomenon worsens over time and may eventually cause gelation of the positive electrode slurry.

To reduce or prevent this gelation phenomenon, a neutralization reaction may be performed for the positive electrode slurry, and a metal oxide including a metal with an oxidation number of 4 or higher and having acidic properties can be used. Metal oxide particles including a metal with an oxidation number of 4 or higher are first coated on the surface of the lithium iron oxide particles, and subsequently used as an additive for a positive electrode to prepare a positive electrode slurry. Accordingly, the metal oxides including the metal with an oxidation number of 4 or higher may react first with residual lithium to reduce or suppress the basification of the positive electrode slurry and the production of additional lithium compounds. Through the above process, the gelation phenomenon of the positive electrode slurry can be reduced or suppressed, and the dispersibility of the positive electrode slurry can also be improved.

As an example, the metal having an oxidation number of 4 or higher may include at least one of V, W, Mo, Mn, Nb, Sb, As, Si, Mn, Sn, Zn, Ru, Ti, or a combination thereof. For example, the metal oxide may be a metal oxide including a metal having an oxidation number of 4 or higher, such as at least one of V, W, Mo, Mn, Nb, Sb, As, Si, Mn, Sn, Zn, Ru, Ti, or a combination thereof. The metal oxide may further include a monovalent metal such as K.

As an example, the metal oxide may include at least one of V₂O₅, WOs, MoOs, MoO₂, KMnO₄, Nb₂O₅, Sb₂O₅, As₂O₅, SiO₂, MnO₂, SnO₂, ZnO₂, RuO₂, TiO₂, or a combination thereof. When using the aforementioned metal oxide as the metal oxide particles, an increase in viscosity of the positive electrode slurry can be reduced or effectively suppressed, which can be more advantageous in reducing or preventing gelation phenomenon.

For example, the metal oxide may be or include a metal oxide having an oxidation number of 5 or higher. Examples of the metal oxide having an oxidation number of 5 or higher may include V₂O₅, WOs, MoOs, KMnO₄, Nb₂O₅, Sb₂O₅, As₂O₅, or a combination thereof. The metal oxide having an oxidation number of 5 or higher can improve or maximize the effects of reducing or suppressing the increase in viscosity of the positive electrode slurry, inhibiting gelation, and ensuring phase stability.

For example, an average particle diameter (D₅₀) of the metal oxide particles may be about 0.1 µm to about 3 µm, for example about 0.1 µm to about 2 µm, or about 0.5 µm to about 1 µm. Within any of the above ranges, a desired or improved adhesion with lithium iron oxide particles, which are the core particles of the additive for a positive electrode, can be achieved, and the effect of the additive for the positive electrode can be improved or maximized by harmoniously mixing with the lithium iron oxide particles.

In some example embodiments, the average particle diameter (D₅₀) of the lithium iron oxide particles may be about 5 to about 50 times, for example, about 8 to about 50 times, about 10 to about 30 times, or about 12 to about 20 times the average particle diameter of the metal oxide particles (D₅₀). Within any of the above ranges, the effects of improving the efficiency, capacity, and lifecycle of the battery due to the lithium iron oxide particles in the additive for a positive electrode, and the effects of reducing or suppressing the gelation phenomenon of the positive electrode slurry and improving phase stability due to the metal oxide particles can be achieved in harmony.

As an example, based on 100 wt% of the additive for the positive electrode, the metal oxide particles may be included in an amount of about 1 wt% to about 20 wt%, for example about 1 wt% to about 15 wt%, about 5 wt% to about 15 wt%, or about 10 wt% to about 15 wt%. Within any of the above ranges, the gelation phenomenon of the positive electrode slurry can be effectively reduced or suppressed without reducing capacity or causing side effects.

For example, in the additive for a positive electrode, a content ratio of the lithium iron oxide particles and the metal oxide particles may be about 99:1 to about 80:20, for example, about 99:1 to about 90:10, about 95:5 to about 85:15, or about 90:10 to about 80:20 in a weight ratio. Within any of the above ranges, improving the efficiency, capacity, and lifecycle of the battery due to the lithium iron oxide particles in the additive for a positive electrode and reducing or suppressing the gelation phenomenon of the positive electrode slurry due to the metal oxide particles, can be achieved in harmony.

In some example embodiments, the additive for the positive electrode may include a coating layer on the surface of the lithium iron oxide particles, and the coating layer may include the metal oxide particles in an amount of about 80 wt% to about 100 wt%, for example about 85 wt% to about 100 wt%, about 90 wt% to about 100 wt%, about 95 wt% to about 100 wt%, about 99 wt% to about 100 wt%, about 99.9 wt% to about 100 wt%, or about 99.9999 wt% to about 100 wt%. Based on lithium iron oxide particles, which constitute one core particle in the additive for the positive electrode, the coating layer may include metal oxide particles as a main component. For example, the coating layer may either be continuously formed, or in the form of discontinuous islands, on the surface of the lithium iron oxide particles.

As an example, the additive for the positive electrode may include two or more metal oxide particles, for example, 2 to 50, 2 to 30, 3 to 25, or 10 to 20 metal oxide particles for one lithium iron oxide particle. Within any of the above ranges, improving the efficiency, capacity, and lifecycle of the battery due to the lithium iron oxide particles in the additive for a positive electrode, and reducing or suppressing the gelation phenomenon of the positive electrode slurry due to the metal oxide particles can be achieved in harmony.

A thickness of the coating layer may be about 0.1 µm to about 2 µm, for example about 0.1 µm to about 1 µm, about 0.5 µm to about 1.5 µm, or about 1 µm to about 2 µm. Within this range, reducing or suppressing the gelation phenomenon of the positive electrode slurry according to the coating layer can be harmoniously achieved without reducing the capacity thereof, or causing side effects. The method of measuring the thickness of the coating layer is not particularly limited since the thickness of the coating layer can be measured by conventional methods. As an example, the thickness can be measured using a transmission electron microscope photograph or a scanning electron microscope photograph, based on the coating layer including metal oxide particles present on the surface of the lithium iron oxide particle.

### Method of Preparing Additive for Positive Electrode

In some example embodiments, a method of preparing an additive for a positive electrode includes dry-mixing metal oxide particles including a metal with an oxidation number of 4 or higher and lithium iron oxide particles, and heat-treating the dry-mixed resulting material.

The above description is with respect to the method of manufacturing the additive for a positive electrode according to some example embodiments. Hereinafter, the additive for a positive electrode will not be repeatedly described, but a process of manufacturing the additive for a positive electrode according to some example embodiments will be described in detail.

First, the metal oxide particles including a metal having an oxidation number of 4 or higher and the lithium iron oxide particles are dry-mixed. Herein, to the metal oxide particles including a metal having an oxidation number of 4 or higher and the lithium iron oxide particles, the above description in the additive for a positive electrode may be equally applied. Accordingly, the metal oxide particles and the lithium iron oxide particles are dry-mixed without a solvent to reduce or suppress deterioration of the lithium iron oxide particles which are vulnerable to moisture, and thus to avoid or reduce deteriorating a function of the additive for the positive electrode but to provide, so that the additive may improve charge and discharge efficiency, capacity characteristics, and lifecycle characteristics of rechargeable lithium batteries.

Subsequently, the dry-mixed material may be heat-treated. Through the heat treatment, the metal oxide particles including the metal having an oxidation number of 4 or higher and being acidic may effectively react with the lithium iron oxide particles to form coating of the metal oxide particles on the surface of the lithium iron oxide particles, which may advantageously achieve a desired function of the additive for the positive electrode.

In some example embodiments, the metal oxide particles and the lithium iron oxide particles may be mixed by stirring, for example, at about 1,000 rpm to about 2,000 rpm at about 25 °C to about 50 °C. For example, the heat treatment may be performed at about 200 °C to about 500 °C, for example, about 200°C C to about 400 °C, or about 300 °C to about 400 °C. In addition, the heat treatment may be performed within any of the above temperature ranges for about 2 hours to about 10 hours, for example, about 2 hours to about 9 hours, about 2 hours to about 8 hours, or about 5 hours to about 8 hours. Within any of the above ranges, it is possible to obtain an additive for the positive electrode that includes the core particles and the coating of the metal oxide particles on the core particles.

### Positive Electrode

In some example embodiments, the positive electrode may include a positive electrode current collector and a positive electrode active material layer on the positive electrode current collector, and the positive electrode active material layer includes the aforementioned additive for a positive electrode. The positive electrode active material layer includes a positive electrode active material and may further include a binder and/or a conductive material. As an example, the positive electrode may further include an additive that can constitute a sacrificial positive electrode.

### Positive Electrode Active Material

The positive electrode active material is not particularly limited as long as the positive electrode active material is or can be used in a rechargeable lithium battery, and a compound (lithiated intercalation compound) capable of intercalating and deintercallating lithium can be used as the positive electrode active material.

For example, the positive electrode active material may include at least one of lithium nickel-based oxide, lithium cobalt-based oxide, lithium manganese-based oxide, lithium iron phosphate-based compound, cobalt-free lithium nickel-manganese-based oxide, lithium-excessive layered oxide, or a combination thereof.

The positive electrode active material according to some example embodiments may include a lithium nickel-based oxide having a nickel content of greater than or equal to about 80 mol%, or greater than or equal to about 90 mol%, based on 100 mol% of metals excluding lithium. This high-nickel-based layered positive electrode active material can achieve high capacity and high energy density.

The positive electrode active material may include, for example, a compound represented by Chemical Formula 11.

[Chemical Formula 11] Liₐ₁Niₓ₁M¹_{y1}M²_{z1}O_{2-b1}X_{b1}

In Chemical Formula 11, 0.9≤a1≤1.8, 0.8≤x1≤1, 0≤y1≤0.2, 0≤z1≤0.2, 0.9≤x1+y1+z1≤1.1, and 0≤b1≤0.1, M¹ and M² are or include independently one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.85≤x1≤1, 0≤y1≤0.15, 0≤z1≤0.15, 0.9≤x1≤1, 0≤y1≤0.1, 0≤z1≤0.1, or 0.91≤x1<1, 0<y1≤0.09, and 0≤z1≤0.09.

The positive electrode active material may include a lithium nickel cobalt-based composite oxide represented by Chemical Formula 12.

[Chemical Formula 12] Liₐ₂Niₓ₂Co_{y2}M³_{z2}O_{2-b2}X_{b2}

In Chemical Formula 12, 0.9≤a2≤1.8, 0.8≤x2<1, 0<y2≤0.2, 0≤z2≤0.2, 0.9≤x2+y2+z2≤1.1, and 0≤b2≤0.1, M³ is or includes one or more of Al, B, Ba, Ca, Ce, Cr, Cu, Fe, Mg, Mn, Mo, Nb, Si, Sr, Ti, V, W, and Zr, and X is or includes one or more of F, P, and S.

In Chemical Formula 12, 0.9≤x2≤0.99, 0.01≤y2≤0.1, and 0.01≤2≤0.1.

For example, the positive electrode active material may include a lithium nickel-based composite oxide represented by Chemical Formula 13. The compound of Chemical Formula 13 may be referred to as lithium nickel-cobalt-aluminum oxide or lithium nickel-cobalt-manganese oxide.

[Chemical Formula 13] Liₐ₃Niₓ₃Co_{y3}M⁴_{z3}M⁵_{w3}O_{2-b3}X_{b3}

In Chemical Formula 13, 0.9≤a3≤1.8, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is or includes one or more of Al and Mn, M⁵ is or includes one or more of B, Ba, Ca, Ce, Cr, Cu, Fe, Mg, Mo, Nb, Si, Sr, Ti, V, W, and Zr, and X is or includes one or more of F, P, and S.

In Chemical Formula 13, 0.9≤x3≤0.98, 0.01≤y3≤0.09, 0.01≤z3≤0.09, and 0≤w3≤0.09.

The positive electrode active material may be in the form of particles, and for example, the positive electrode active material may be in the form of secondary particles in which a plurality of primary particles are agglomerated, or may be in the form of single particles.

The average particle diameter (D₅₀) of the positive electrode active material is not particularly limited, but may be, for example, about 1 µm to about 20 µm, about 3 µm to about 18 µm, or about 5 µm to about 15 µm. The average particle diameter is a diameter (D₅₀) of particles having a cumulative volume of 50 volume% in the particle size distribution that is obtained by measuring the size (diameter or major axis length) of about 20 particles at random in a scanning electron microscope image.

For example, the positive electrode active material may be included in an amount of about 93.5 wt% to about 99.78 wt%, the metal oxide may be included in an amount of about 0.01 wt% to about 0.5 wt%, the organic acid may be included in an amount of about 0.01 wt% to about 1 wt%, the binder may be included in an amount of about 0.1 wt% to about 3 wt%, and the conductive material may be included in an amount of about 0.1 wt% to about 2 wt% based on 100 wt% of the positive electrode active material layer.

### Binder

The binder improves binding properties of positive electrode active material particles with one another and with a positive electrode current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

In some example embodiments, the binder may be or include a fluorine-based binder, and such a fluorine-based binder is desirable for achieving high energy density by strongly adhering the positive electrode active material. However, the fluorine-based binder can be readily deformed due to residual lithium in the lithium iron oxide particles of the additive for a positive electrode, and the modified fluorine-based binder may cause agglomeration and gelation of the positive electrode composition. However, when using the additive for a positive electrode according to some example embodiments, deformation of the binder can be reduced or prevented, and gelation of the positive electrode slurry can be effectively reduced or suppressed.

The fluorine-based binder may include, for example, at least one of polyvinylidene fluoride (PVdF), polyvinylidene fluoride-hexafluoropropylene (PVdF-HFP) copolymer, a polyvinylidene fluoride-trichloroethylene (PVdF-TCE) copolymer, polytetrafluoroethylene (PTFE), polytrifluoroethylene (PTrFE), polychlorotrifluoroethylene (CTFE), polyhexafluoropropylene, hexafluoroisobutylene, or a combination thereof.

The binder may be included in an amount of about 0.1 wt% to about 3 wt%, for example about 0.1 wt% to about 2 wt%, or about 0.5 wt% to about 1.5 wt% based on 100 wt% of the positive electrode active material layer. When the binder content satisfies any of the above ranges, energy density can be increased and durability can be improved by increasing a binding force of the positive electrode active material without adversely affecting the positive electrode.

### Conductive Material

The conductive material is included to provide electrode conductivity, and any electrically conductive material may be used as a conductive material unless the electrically conductive material causes a chemical change in the battery. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The conductive material may be included in an amount of about 0.1 wt% to about 2 wt%, for example, about 0.1 wt% to about 1 wt%, or about 0.3 wt% to about 0.8 wt%, based on 100 wt% of the positive electrode active material layer. When the content of the conductive material satisfies any of the above ranges, electronic conductivity can be increased without adversely affecting the positive electrode.

The positive electrode current collector may be of include Al or stainless steel (SUS), but is not limited thereto.

A content of the positive electrode active material may be 90 wt% to 99.5 wt% based on 100 wt% of the positive electrode active material layer, and each content of the binder and the conductive material may be about 0.5 wt% to about 5 wt% based on 100 wt% of the positive electrode active material layer.

### Rechargeable Lithium Battery

Some example embodiments include a rechargeable lithium battery including the aforementioned positive electrode, negative electrode, and electrolyte.

As an example, the rechargeable lithium battery may include a positive electrode, a negative electrode, a separator between the positive electrode and the negative electrode, and an electrolyte solution.

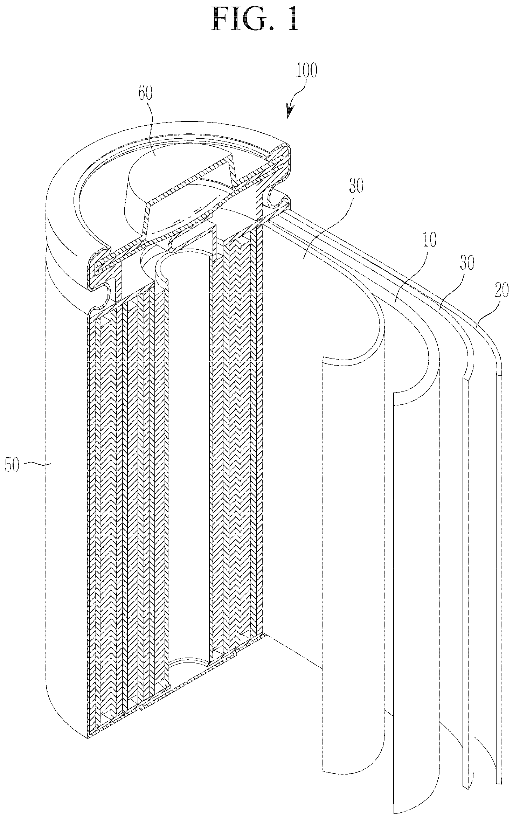

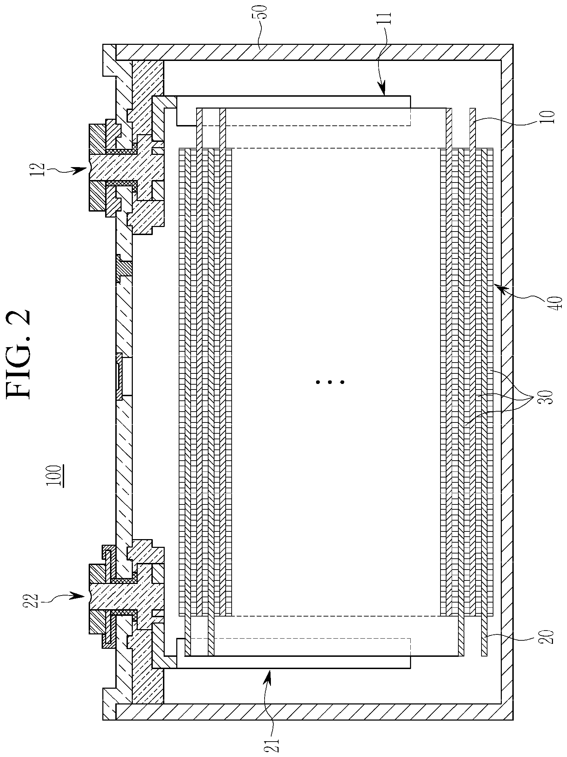

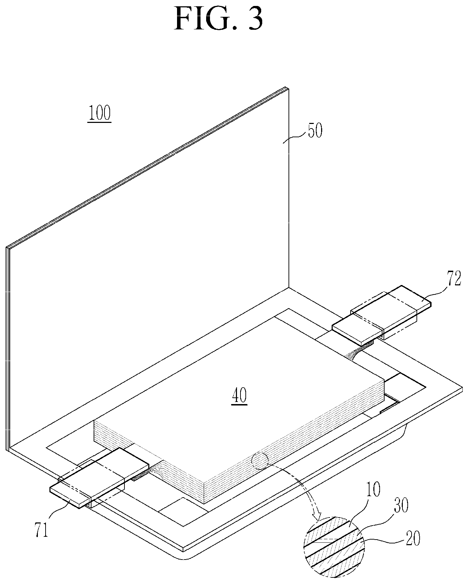

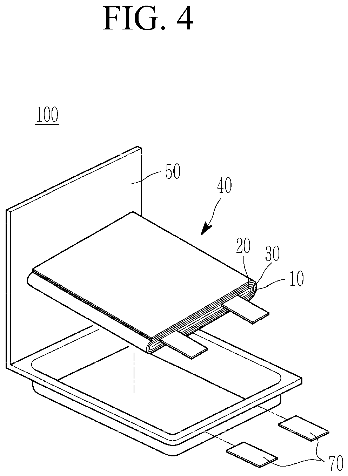

The rechargeable lithium battery may be classified into cylindrical, prismatic, pouch, or coin-type batteries, and the like depending on the shape thereof. FIGS. 1 to 4 are schematic views showing the rechargeable lithium battery according to some example embodiments, where FIG. 1 illustrates a cylindrical battery, FIG. 2 illustrates a prismatic battery, and FIGS. 3 and 4 illustrate a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, that is, a positive electrode tab 71 and a negative electrode tab 72 illustrated in FIG. 3 and serving as an electrical path for inducing the current formed in the electrode assembly 40 to the outside.

### Negative Electrode

The negative electrode may include a negative electrode current collector, and a negative electrode active material layer on the negative electrode current collector, and the negative electrode active material layer may include a negative electrode active material, and may further include a binder and/or a conductive material.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular shaped, sheet shaped, flake shaped, spherical shaped, or fiber shaped from natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal that is at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include silicon, a silicon-carbon composite, SiOₓ (0 < x < 2), a Si-Q alloy (wherein Q is an element that is at least one of an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, about 0.5 µm to about 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a silicon content may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a silicon content may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be in the form of silicon alone, in the form of a silicon alloy, or in an oxidized form. The oxidized form of silicon may be represented by SiOₓ (0<x<2). In an example, the atomic content ratio of Si:O, which indicates a degree of oxidation, may be about 99:1 to about 33:67. As used herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

The binder is configured to sufficiently adhere the negative electrode active material particles to each other and also to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change in the battery. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be or include an electrolyte solution, which may include a non-aqueous organic solvent and a lithium salt.

The non-aqueous organic solvent constitutes a medium for transmitting ions taking part in the electrochemical reaction of the battery.

The non-aqueous organic solvent may be or include a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

A concentration of lithium salt may be within the range of about 0.1 M to about 2.0 M. When the concentration of lithium salt is within the above range, the electrolyte solution has a desired ion conductivity and viscosity, and thus desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer including at least one of polyolefin such as polyethylene and polypropylene, polyester such as at least one of polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a polyvinylidene fluoride-based polymer or a (meth)acryl-based polymer.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked. Here, a thickness of the coating layer may be about 0.5 µm to about 20 µm, for example, about 1 µm to about 10 µm, or about 1 µm to about 5 µm.

The rechargeable lithium battery according to some example embodiments may be applied to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

### 1. Preparation Additive for Positive Electrode

V₂O₅ particles (D₅₀ = 1 µ m) and Li₅FeO₄ particles (D₅₀ = 12 µm) were dry-mixed by stirring at 2,000 rpm and at 25 °C and subsequently heat-treated at 300 °C for 5 hours, preparing an additive for a positive electrode in which the V₂O₅ particles was coated on the surface of the Li₅FeO₄ particles.

Herein, an addition amount of the Li₅FeO₄ particles was adjusted to be 90 wt%, while an addition amount of the V₂O₅ particle was adjusted to be 10 wt%, based on 100 wt% of the finally obtained additive for a positive electrode.

In addition, when the additive for a positive electrode was examined with a scanning electron microscope (SEM) and a transmission electron microscope (TEM), the additive for the positive electrode contained 10 to 20 V₂O₅ particles per one Li₅FeO₄ particle.

### 2. Manufacture of Positive Electrode

95.4 wt% of a positive electrode active material (LiNi_{0.915}Co_{0.07}Al_{0.015}O₂), 1.2 wt% of a polyvinylidene fluoride binder, 0.4 wt% of a carbon nanotube conductive material, and 3 wt% of the additive for a positive electrode were mixed in an NMP solvent to prepare positive electrode slurry, and this slurry was coated on an aluminum foil current collector and subsequently dried and compressed, manufacturing a positive electrode.

### 3. Manufacturing of Rechargeable Lithium Battery Cell

A negative electrode active material layer slurry was prepared by mixing 97.5 wt% of graphite negative electrode active material, 1.5 wt% of carboxymethyl cellulose, and 1 wt% of styrene butadiene rubber in a water solvent. The negative electrode active material layer slurry was coated on a copper foil current collector, dried, and pressed, manufacturing a negative electrode.

The positive and negative electrodes were used with a polytetrafluoroethylene separator and an electrolyte solution prepared by dissolving 1 M LiPF₆ in a mixed solvent of ethylene carbonate and dimethyl carbonate in a volume ratio of 3:7 to manufacture a rechargeable lithium battery cell in a common method.

### Comparative Example 1

A rechargeable lithium battery cell was manufactured substantially the same manner as in Example 1 with a difference that the Li₅FeO₄ particles (D₅₀ = 12 µm) alone was used in an amount of 3 wt% as the additive for a positive electrode in the positive electrode slurry during the manufacture of the positive electrode.

### Comparative Example 2

A rechargeable lithium battery cell was manufactured substantially the same manner as in Example 1 with a difference that each of 2.7 wt% of the Li₅FeO₄ particles (D₅₀ = 12 µm) and 0.3 wt% of the V₂O₅ particle (D₅₀ = 1 µm) (total: 3 wt%) was used as the additive for a positive electrode instead of using the additive for a positive electrode in which V₂O₅ particle (D₅₀ = 1 µm) were coated on the surface of Li₅FeO₄ particles (D₅₀ = 12 µm) in the positive electrode slurry during the manufacture of the positive electrode.

### Evaluation Example 1: Evaluation of scanning electron microscope (SEM) image

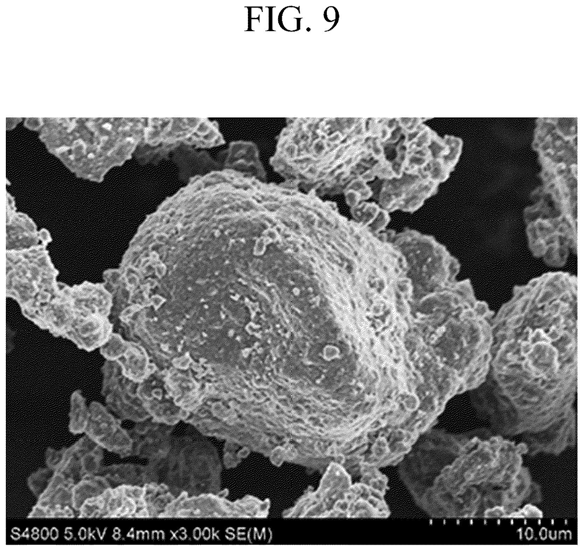

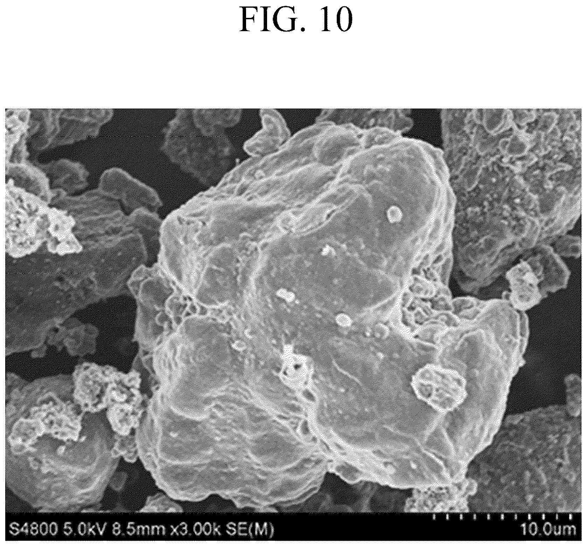

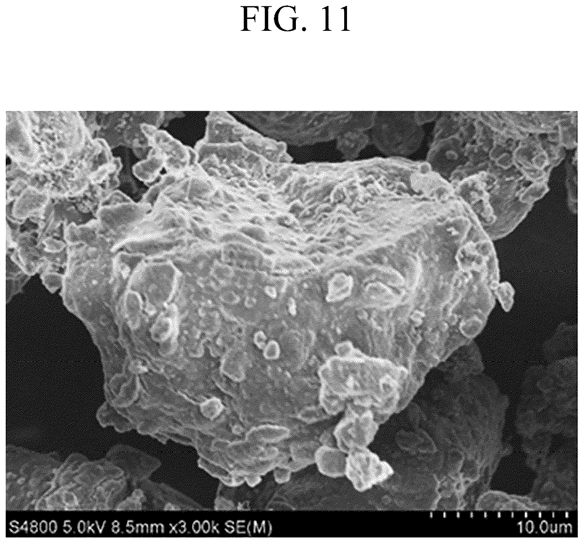

An image of each of the additives for a positive electrode according to Example 1 and Comparative Examples 1 and 2 was taken with a scanning electron microscope (SEM), and the images are respectively shown in FIGS. 9 to 11.

Referring to FIGS. 9 to 11, the additive for a positive electrode of Example 1, compared to the additives of Comparative Examples 1 and 2, exhibited a different surface morphology in the images taken with the scanning electron microscope (SEM).

In other words, the additive for a positive electrode according to Example 1 has a V₂O₅ particles located on the Li₅FeO₄ particle surface.

On the contrary, the additive for a positive electrode according to Comparative Example 1 exhibited no V₂O₅ particles located on the Li₅FeO₄ particle surface, and the additive for a positive electrode according to Comparative Example 2 exhibited that the V₂O₅ particles were not evenly distributed but locally agglomerated near the Li₅FeO₄ particles.

### Evaluation Example 2: Evaluation of viscosity of positive electrode slurry

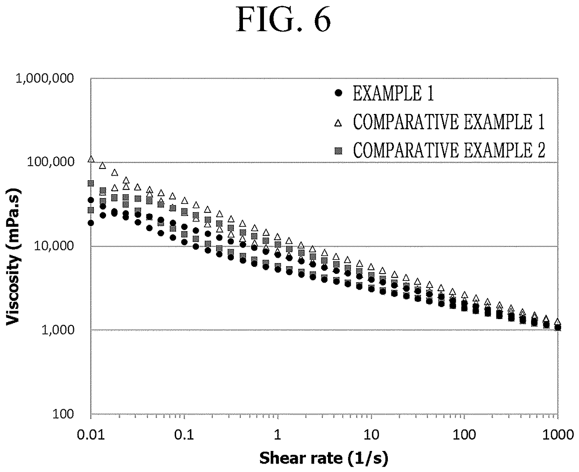

In order to evaluate viscosity of positive electrode slurry, the positive electrode slurries prepared in Example 1 and Comparative Examples 1 and 2 were measured with respect to viscosity changes according to a shear rate, and the results are shown in FIG. 6. Herein, the viscosity changes according to a shear rate was measured by using a rheometer device (Model name: MCR 302e, Manufacturer: Anton Paar GmbH).

Referring to FIG. 6, Example 1 and Comparative Examples 1 and 2 all exhibited similar viscosity at a high shear rate, but at a low shear rate, Example 1 exhibited lower viscosity than Comparative Examples 1 and 2.

### Evaluation Example 3: Viscoelasticity evaluation of positive electrode slurry

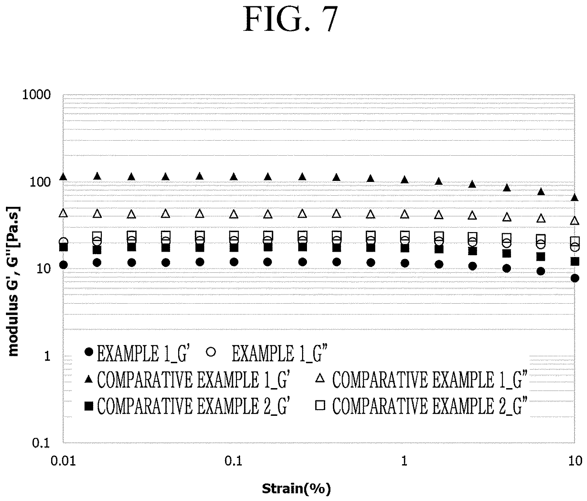

In order to evaluate viscoelasticity of positive electrode slurry, the positive electrode slurries prepared in Example 1 and Comparative Examples 1 and 2 were measured with respect to modulus changes according to strain, and the results are shown in FIG. 7. Herein, the modulus changes according to strain were measured by using the rheometer device (Model name: MCR 302e, Manufacturer: Anton Paar GmbH).

Referring to FIG. 7, Example 1 exhibited a modulus value of G'<G" indicating a high loss elasticity coefficient, but Comparative Example 1 exhibited a modulus value of G'>G" indicating a high storage elasticity coefficient. In addition, Comparative Example 2 exhibited a modulus value of G'<G" indicating a high loss elasticity coefficient but a lower G' and G" modulus difference than Example 1.

This means that Example 1 had a viscoelasticity fluid structure, but Comparative Example 1 had a viscoelasticity solid structure. Compared to Example 1, Comparative Example 1 exhibited that slurry flowability was deteriorated due to agglomeration in the slurry, which may be disadvantageous for dispersion. In addition, the larger G' and G" modulus difference under the condition of G'<G", the higher fluid properties.

Referring to the results, the positive electrode slurry of Example 1 exhibited an desired or improved viscoelasticity fluid structure, compared to the positive electrode slurries of Comparative Examples 1 and 2, which confirmed desired or improved dispersibility.

### Evaluation Example 4: Evaluation of phase stability over time of positive electrode slurry

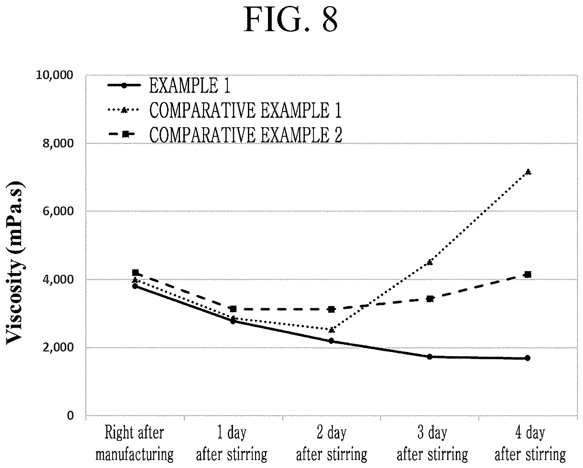

In order to evaluate phase stability of positive electrode slurry, the positive electrode slurries prepared in Example 1 and Comparative Examples 1 and 2 were measured with respect to viscosity at regular intervals over time under low-speed stirring, and the results are shown in FIG. 8. Herein, the viscosity was measured at 25 °C by using the viscosity measuring device (Model name: MCR 302e, Manufacturer: Anton Paar GmbH).

Referring to FIG. 8, the positive electrode slurry of Example 1, which was allowed to stand with low-speed stirring, exhibited a little decrease in viscosity over time shortly after the manufacturing, but constant viscosity without any change in viscosity after 3 days of stirring. Accordingly, the positive electrode slurry of Example 1 exhibited desired or improved stability without gelation phenomenon.

On the contrary, Comparative Example 1 exhibited a sharp increase in viscosity after 2 days of stirring and thus gelation phenomenon.

In addition, Comparative Example 2 exhibited a little more increase in viscosity due to the addition of the V₂O₅ particles than Comparative Example 1 but a little higher viscosity than Example 1.

Accordingly, the positive electrode slurry using the additive for a positive electrode of Example 1, in which a V₂O₅ particles was formed on the Li₅FeO₄ particle surface, exhibited the most desired or improved phase stability and the best gelation-reducing or gelation-suppressing effect.

### Evaluation Example 5: Evaluation of Initial charge/discharge capacity and efficiency

The positive electrode slurries prepared in Example 1 and Comparative Examples 1 and 2 on the second day of stirring were respectively used to manufacture rechargeable lithium batteries, and each of the rechargeable lithium batteries was charged to an upper limit voltage of 4.2 V at a constant current of 0.05 C and to 0.05 C at the constant voltage and subsequently discharged to a cut-off voltage of 3.0 V at 0.05 C at 25 °C for initial charge and discharge. In Table 1, initial charge capacity, initial discharge capacity, and a ratio of the latter to the former as efficiency are provided.

**(Table 1)**

| | Charge capacity (mAh/g) | Discharge capacity (mAh/g) | Initial charging and discharging efficiency (%) |
|---|---|---|---|
| Example 1 | 240.8 | 203.2 | 84.4 |
| Comparative Example 1 | 201.4 | 146.8 | 72.9 |
| Comparative Example 2 | 231.5 | 192.2 | 83.0 |

Referring to Table 1, the rechargeable lithium battery cell of Example 1 realized desired or improved charge and discharge capacity and efficiency characteristics, compared to the comparative examples.

### Evaluation Example 6: Lifecycle characteristics

After the initial charge and discharge of Evaluation Example 5, the cells were charged and discharged for 50 cycles or more at 1.0 C within a voltage range of 3.0 V to 4.2 V at 25 °C to calculate a ratio of 50^{th} cycle discharge capacity to the initial discharge capacity, and the results are shown in Table 2.

**(Table 2)**

| | 50th capacity retention rate (%) |
|---|---|
| Example 1 | 94.6 |
| Comparative Example 1 | 87.8 |
| Comparative Example 2 | 91.2 |

Referring to Table 1, the rechargeable lithium battery cell of Example 1 realized desired or improved lifecycle characteristics, compared to the lifecycle characteristics of the comparative examples.

While this disclosure has been described in connection with what is presently considered to be practical example embodiments, it is to be understood that the invention is not limited to the disclosed example embodiments. On the contrary, it is intended to cover various modifications and equivalent arrangements included within the spirit and scope of the appended claims.

**<Description of Symbols>**

| | | | |
|---|---|---|---|
| 1: | lithium iron oxide particle | 2: | metal oxide particle |
| 3: | additive for a positive electrode | | |
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. An additive (3) for a positive electrode (10), the additive (3) comprising
lithium iron oxide particles (1); and
metal oxide particles (2) including a metal having an oxidation number of 4 or higher located on the surface of the lithium iron oxide particles (1).

2. The additive (3) as claimed in claim 1, wherein the metal comprises at least one of V, W, Mo, Mn, Nb, Sb, As, Si, Mn, Sn, Zn, Ru, and Ti.

3. The additive (3) as claimed in claim 1or 2, wherein the metal oxide comprises at least one of V₂O₅, WO₃, MoO₃, KMnO₄, Nb₂O₅, Sb₂O₅, As₂O₅, SiO₂, MnO₂, SnO₂, ZnO₂, MoO₂, RuO₂, and TiO₂.

4. The additive (3) as claimed in any of the claims 1 to 3, wherein the metal has an oxidation number of 5 or higher.

5. The additive (3) as claimed in any of the claims 1 to 4, wherein the metal oxide comprises V₂O₅, WO₃, MoO₃, KMnO₄, Nb₂O₅, Sb₂O₅, and As₂O₅.

6. The additive (3) as claimed in any of the claims 1 to 5, wherein the lithium iron oxide particle is represented by Chemical Formula 1:
[Chemical Formula 1] Li₅₊ₐFeO_{4-b}
wherein, in Chemical Formula 1, 0≤a≤1, and 0≤b≤1.

7. The additive (3) as claimed in any of the claims 1 to 6, wherein the lithium iron oxide particles (1) are included in an amount of about 80 wt% to about 99 wt% based on 100 wt% of the additive (3) for the positive electrode (10).

8. The additive (3) as claimed in any of the claims 1 to 7, wherein the metal oxide particles (2) are included in an amount of about 1 wt% to about 20 wt% based on 100 wt% of the additive (3) for the positive electrode (10).

9. The additive (3) as claimed in any of the claims 1 to 8, wherein a content ratio of the lithium iron oxide particles (1) to the metal oxide particles (2) is about 99:1 to about 80:20 by weight.

10. The additive (3) as claimed in any of the claims 1 to 9, wherein an average particle diameter of the lithium iron oxide particles (1) is about 5 times to about 50 times an average particle diameter of the metal oxide particles (2).

11. The additive (3) as claimed in any of the claims 1 to 10, wherein the lithium iron oxide particles (1) have an average particle diameter of about 5 µm to about 20 µm, and/or the metal oxide particles (2) have an average particle diameter of about 0.1 µm to about 3 µm.

12. A method of preparing an additive (3) for a positive electrode (10), the method comprising:
dry-mixing metal oxide particles (2) including a metal having an oxidation number of 4 or higher and lithium iron oxide particles (1), and
heat-treating the dry-mixed resulting material.

13. The method as claimed in claim 12, wherein the heat-treating is performed at a temperature of about 200 °C to about 500 °C. and/or the heat-treating is performed for about 2 hours to about 10 hours at the temperature of about 200 °C to about 500 °C.

14. A positive electrode (10), comprising:
a positive electrode current collector, and
a positive electrode active material layer on the positive electrode current collector,
wherein the positive electrode active material layer includes the additive (3) for the positive electrode (10) as claimed in any of the claims 1 to 11.

15. A rechargeable lithium battery (100), comprising
the positive electrode (10) as claimed in claim 14,
a negative electrode (20), and
an electrolyte.
